# EUROPÄISCHE PATENTSCHRIFT

(11) **EP 3 789 511 B1**
(45) Veröffentlichungstag und Bekanntmachung des Hinweises auf die Patenterteilung: **07.06.2023**
(21) Anmeldenummer: 19200059.4
(22) Anmeldetag: 27.09.2019
(51) Int. Cl.: B05B 12/12, B05B 13/04, B05B 16/00, B22F 7/08, B22F 10/25, B22F 10/66, B22F 12/45, B22F 12/86, B22F 12/90, B23K 26/00, B23K 26/03, B23K 26/12, B23K 26/144, B23K 26/342, B33Y 10/00, B33Y 50/02, C23C 24/10, F16D 65/12, B05B 13/02, C23C 4/134

(54) **BESCHICHTUNGSVORRICHTUNG UND VERFAHREN ZUM METALLISCHEN BESCHICHTEN VON WERKSTÜCKEN**
COATING DEVICE AND METHOD FOR METALLIC COATING OF WORKPIECES
DISPOSITIF DE REVÊTEMENT ET PROCÉDÉ DE REVÊTEMENT MÉTALLIQUE DE PIÈCES

(30) Priorität: 09.09.2019 EP 19196156
(43) Veröffentlichungstag der Anmeldung: 10.03.2021
(73) Patentinhaber: Sturm Maschinen- & Anlagenbau GmbH, 94330 Salching (DE)
(72) Erfinder: MARTIN, Carlos, 94469 Deggendorf (DE); BAIER, Roland, 93077 Bad Abbach (DE)
(74) Vertreter: Wunderlich & Heim Patentanwälte Partnerschaftsgesellschaft mbB

(56) Entgegenhaltungen:
- EP-A1- 0 661 127
- CN-A- 104 388 929
- CN-A- 107 904 591
- US-A1- 2006 272 909

## Beschreibung

Die Erfindung betrifft eine Beschichtungsvorrichtung zum metallischen Beschichten von Werkstücken mit einem Gehäuse, welches einen Arbeitsraum umschließt, eine Halteeinrichtung zum Halten mindestens eines Werkstückes in dem Arbeitsraum, mindestens eine Auftragseinrichtung mit einer Auftragsdüse zum Aufbringen eines Metallpulvers auf eine zu beschichtende Werkstückfläche und einen Laser zum lokalen Aufschmelzen des Metallpulvers auf der Werkstückfläche zum Bilden einer Beschichtung, und mindestens einer Bewegungseinrichtung, mit welcher die mindestens eine Auftragseinrichtung beim Beschichten relativ zur Werkstückfläche bewegbar ist, gemäß dem Oberbegriff des Anspruches 1.

Die Erfindung betrifft weiterhin ein Verfahren zum metallischen Beschichten von Werkstücken, bei dem mindestens ein Werkstück mit einer Halteeinrichtung in einem Gehäuse in einem Arbeitsraum gehalten wird, eine Werkstückfläche mit mindestens einer Auftragseinrichtung beschichtet wird, wobei mit einer Auftragsdüse der mindestens einen Auftragseinrichtung ein Metallpulver auf eine zu beschichtende Werkstückfläche aufgebracht und mittels eines Lasers der mindestens einen Auftragseinrichtung das aufgebrachte Metallpulver lokal auf der Werkstücküberfläche aufgeschmolzen wird, wobei sich eine metallische Beschichtung bildet, und die mindestens eine Auftragseinrichtung beim Beschichten mittels mindestens einer Bewegungseinrichtung relativ zur Werkstückoberfläche bewegt wird, gemäß dem Oberbegriff des Anspruches 8.

Derartige Beschichtungsvorrichtungen und Verfahren zum metallischen Beschichten von Werkstücken sind als ein sogenanntes Laserauftragsschweißen bekannt. Hierbei wird auf ein metallisches Werkstück ein Pulver aufgebracht, welches lokal mittels eines Lasers aufgeschmolzen wird. Das aufgeschmolzene Metallpulver bildet auf der Werkstückoberfläche eine Beschichtung, welche insbesondere besonders verschleißfest oder korrosionsbeständig sein kann. Das Verfahren wird dabei in einem abgeschlossenen Arbeitsraum der Beschichtungsvorrichtung durchgeführt.

Aus der gattungsbildenden CN 104 388 929 A geht ein Beschichten eines Fräskopfes mit einem Laser hervor. Ein Laserstrahl wird in zwei Bündel aufgesplittet, welche unterschiedliche Nuten an dem Werkstück bearbeiten.

Eine mehrköpfige Beschichtungsanordnung ist aus der CN 107 904 591 A bekannt.

EP 0 661 127 A1 offenbart ein Verfahren und eine Vorrichtung zur Bearbeitung von Werkstücken mit einem Laserstrahl.

Der Erfindung liegt die **Aufgabe** zugrunde, eine Beschichtungsvorrichtung und ein Verfahren zum metallischen Beschichten von Werkstücken anzugeben, mit welchen Werkstücke besonders effizient beschichtet werden können.

Nach der Erfindung wird die Aufgabe zum einen durch eine Beschichtungsvorrichtung mit den Merkmalen des Anspruches 1 und zum anderen mit einem Verfahren mit den Merkmalen des Anspruches 8 gelöst. Bevorzugte Ausführungsformen der Erfindung sind in den jeweils abhängigen Ansprüchen angegeben.

Bei der erfindungsgemäßen Beschichtungsvorrichtung ist vorgesehen, dass in dem Arbeitsraum des Gehäuses mindestens zwei Auftragseinrichtungen angeordnet sind, welche zum gleichzeitigen Aufbringen und Aufschmelzen von Metallpulver ausgebildet sind.

Eine Grundidee der Erfindung kann darin gesehen werden, den Ausstoß der Beschichtungsvorrichtung dadurch zu erhöhen, dass in dem Arbeitsraum, der vom Gehäuse der Beschichtungsvorrichtung umschlossen wird, zwei oder mehr Auftragseinrichtungen angeordnet sind, welche gleichzeitig ein Beschichten durchführen.

Eine bevorzugte Ausführungsform der Erfindung besteht darin, dass die zu beschichtende Werkstückfläche horizontal angeordnet ist. Eine horizontale Anordnung der Werkstückfläche erlaubt insbesondere einen besonders sparsamen Einsatz von Metallpulver. Dieses kann so auf die Werkstückfläche aufgetragen werden, so dass es zunächst auf der horizontal gerichteten Werkstückfläche liegenbleibt. In dieser Position kann es zielgerichtet durch den Laser aufgeschmolzen werden.

Nach einer alternativen Anordnung einer erfindungsgemäßen Beschichtungsvorrichtung ist es vorteilhaft, dass die zu beschichtende Werkstückfläche vertikal angeordnet ist. Bei einer vertikalen Anordnung, bei welcher die Werkstückfläche in etwa in Schwerkraftrichtung ausgerichtet ist, wird überschüssiges Metallpulver umgehend nach unten abgeführt. Somit verbleibt nur das unmittelbar durch den Laser aufgeschmolzene Metallpulver auf der Werkstückfläche, so dass eine sehr exakte Beschichtung erreicht werden kann.

Ein besonders effizientes Beschichten kann nach einer Weiterbildung der Erfindung dadurch erzielt werden, dass zumindest zwei Auftragseinrichtungen vorgesehen sind, durch welche gleichzeitig an einem Werkstück eine Beschichtung auftragbar ist. Durch zwei oder mehr Auftragseinrichtungen, welche gleichzeitig ein Werkstück beschichten, kann eine besonders kurze Bearbeitungszeit je Werkstück erzielt werden.

Besonders vorteilhaft ist es nach einer Weiterentwicklung der erfindungsgemäßen Beschichtungsvorrichtung, dass das Werkstück scheiben- oder plattenförmig gebildet ist und dass ein Beschichten an zwei gegenüberliegenden Flächen erfolgt. Das Werkstück kann insbesondere eine Bremsscheibe sein, welche zu beiden Seiten eine zu beschichtende Werkstückfläche aufweist, die gleichzeitig mit den Auftragseinrichtungen beschichtet werden. Grundsätzlich kann auch bei einer horizontalen Anordnung des Werkstücks eine Werkstückfläche durch vorzugsweise zwei Auftragseinrichtungen gleichzeitig beschichtet werden, welche sich etwa um 180° versetzt um eine Mittenachse des Werkstücks gegenüberliegen.

Besonders zweckmäßig ist es nach einer Weiterbildung der Erfindung, dass die Auftragseinrichtungen unmittelbar gegenüberliegen und das Beschichten auf beiden Seiten gleichzeitig durchführbar ist. Insbesondere bei einer vertikalen Ausrichtung des Werkstücks können so thermische Spannungen zumindest symmetrisch zu einer vertikalen Werkstückebene an beiden Seiten des Werkstücks aufgebracht werden. Hierdurch kann ein unerwünschter Verzug des Werkstücks durch eine unsymmetrische Wärmeinbringung weitgehend vermieden werden.

Eine weitere besonders wirtschaftliche Ausführungsform der erfindungsgemäßen Beschichtungsvorrichtung besteht darin, dass mindestens zwei Werkstücke in einem Arbeitsraum angeordnet sind und gleichzeitig von zumindest jeweils einer Auftragseinrichtung beschichtbar sind. Die Werkstücke können dabei an getrennten Halteeinrichtungen oder vorzugsweise an einer gemeinsamen Halteeinrichtung angeordnet sein, welche die mindestens zwei Werkstücke gemeinsam tragen. Die Halteeinrichtung kann dabei insbesondere auf einer Transportpalette angeordnet sein, mit welcher die Werkstücke in und aus der Beschichtungsvorrichtung gemeinsam transportiert werden. Durch die Aufnahme von zumindest zwei Werkstücken in einer Beschichtungsvorrichtung kann diese besonders effektiv genutzt werden, einschließlich der notwendigen Einrichtungen zum Zuführen des Metallpulvers sowie zum Abführen des nicht verbrauchten Metallpulvers.

Die mindestens eine Bewegungseinrichtung ist zum Teil an der Halteeinrichtung für das Werkstück angeordnet. Das Werkstück ist dabei drehbar an der Halterung gelagert, wobei das Werkstück durch einen Motor in eine Drehbewegung versetzt wird.

Weiter ist eine Steuereinrichtung vorgesehen, durch welche die Bewegungseinrichtung und damit die Bewegung des Werkstücks an der Halteeinrichtung und eine Bewegung der Auftragseinrichtung relativ zum Werkstück gesteuert wird.

Das erfindungsgemäße Verfahren zum metallischen Beschichten von Werkstücken ist dadurch gekennzeichnet, dass in dem Gehäuse in dem Arbeitsraum mindestens zwei Auftragseinrichtungen angeordnet werden, welche gleichzeitig Metallpulver auftragen und aufschmelzen. Das erfindungsgemäße Verfahren wird durch die zuvor beschriebene Beschichtungsvorrichtung durchgeführt.

Es können dabei die zuvor beschriebenen Vorteile erzielt werden.

Eine bevorzugte Verfahrensvariante besteht darin, dass die zu beschichtende Werkstückfläche beim Beschichten horizontal oder vertikal angeordnet wird. Eine horizontale Anordnung erlaubt einen effizienten Einsatz des Metallpulvers, während bei einer vertikalen Anordnung eine zuverlässige Abführung des nicht verbrauchten Metallpulvers ermöglicht wird.

Eine besonders schnelle Beschichtung eines Werkstücks wird nach einer weiteren Verfahrensvariante dadurch erzielt, dass zumindest zwei Auftragseinrichtungen gleichzeitig an dem Werkstück eine Beschichtung auftragen. Bei einer horizontalen Anordnung des Werkstücks können die Auftragseinrichtungen gleichmäßig entlang des Umfangs des Werkstücks angeordnet sein.

Insbesondere bei einer vertikalen Anordnung eines scheibenförmigen Werkstücks mit zwei zu beschichtenden Werkstückflächen ist es nach einer Weiterbildung der Erfindung vorteilhaft, dass sich die Auftragseinrichtungen unmittelbar gegenüberliegen und ein Beschichten auf einer oder an zwei gegenüberliegenden Seiten des Werkstücks gleichzeitig durchgeführt wird. Bei einer gleichzeitigen Beschichtung von gegenüberliegenden Seiten kann insbesondere einem unerwünschten Wärmeverzug durch eine asymmetrische Wärmeaufbringung entgegengewirkt werden.

Eine hohe Bearbeitungseffizienz kann weiter dadurch erzielt werden, dass mindestens zwei Werkstücke in dem Arbeitsraum angeordnet und gleichzeitig mit zumindest jeweils einer Auftragseinrichtung beschichtet werden. Hierdurch ist eine parallele Bearbeitung von mehreren Werkstücken in einem Arbeitsraum der Beschichtungsvorrichtung möglich. Die Werkstücke können bei einer horizontalen Anordnung sowohl um eine vertikale Drehachse gedreht und um eine horizontale Schwenkachse gewendet werden.

Nachfolgend wird die Erfindung anhand von bevorzugten Ausführungsbeispielen näher erläutert, welche schematisch in den Zeichnungen dargestellt sind. In den Zeichnungen zeigen:
- Fig.1: eine schematische Darstellung einer erfindungsgemäßen Anlage mit einer Modulgruppe;
- Fig. 2: eine schematische Darstellung einer ersten Anordnung zum Beschichten eines Werkstücks; und
- Fig. 3: eine perspektivische Ansicht einer weiteren erfindungsgemäßen Anlage mit mehreren Modulgruppen gemäß Fig. 1;
- Fig. 4: eine perspektivische Ansicht einer zweiten Anordnung zum Beschichten;
- Fig. 5: eine schematische Darstellung einer dritten Anordnung zum Beschichten;
- Fig. 6: eine schematische Darstellung einer vierten Anordnung zum Beschichten.

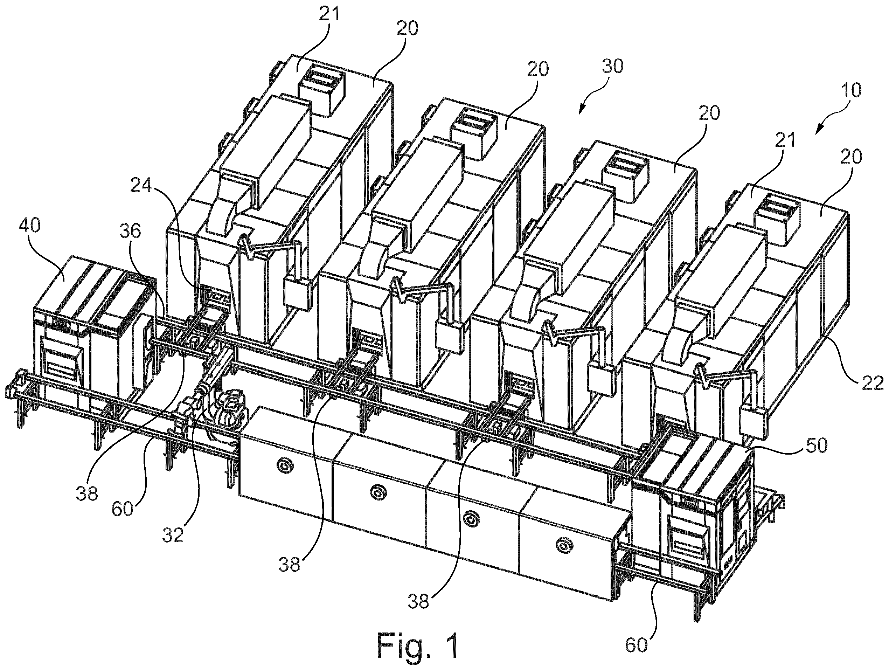

Ein erstes Ausführungsbeispiel einer erfindungsgemäßen Anlage 10 ist in Fig. 1 dargestellt. Diese umfasst vier Beschichtungsvorrichtungen 20, welche in einer Parallelanordnung nebeneinander eine Modulgruppe 30 bilden. Der Modulgruppe 30 vorgeschaltet ist eine Eingangsmessstation 40, zu welcher hier nicht dargestellte Werkstücke mittels einer Hauptfördereinrichtung 60 zugefördert werden. Mittels einer Handhabungseinrichtung 32, welche im vorliegenden Ausführungsbeispiel als ein Mehrachsroboter ausgeführt ist, werden die Werkstücke von der Hauptfördereinrichtung 60 ergriffen und der kastenförmigen Eingangsmessstation 40 zugeführt.

In der Eingangsmessstation 40 werden die Werkstücke vermessen, insbesondere eine zu beschichtende Oberfläche. Hierbei kann insbesondere eine Oberflächenstruktur der zu beschichtenden Fläche erfasst werden, wobei insbesondere Höhen und Tiefen in der Oberfläche erfasst und vermessen werden.

Anschließend kann das vermessene Werkstück aus der Eingangsmessstation 40 über die Handhabungseinrichtung 32 oder direkt aus der Eingangsmessstation 40 an eine lineare Fördereinrichtung 36 übergeben werden, welche entlang den Beschichtungsvorrichtungen 20 verläuft. Vor jeder Beschichtungsvorrichtung 20 ist an der als Linearförderer ausgebildeten Fördereinrichtung 36 eine Zuführeinrichtung 38 angeordnet, mit welcher ein Werkstück über eine Eintrittsöffnung 24 in einen Arbeitsraum 23 eines kastenförmigen Gehäuses 21 der ausgewählten Beschichtungsvorrichtung 20 eingeführt wird.

Die Beschichtungsvorrichtungen 20 sind gleich oder im Wesentlichen gleich ausgebildet und weisen einen Transportrahmen 22 auf. Mit diesem Transportrahmen 22 können die Beschichtungsvorrichtungen 20 mit einem Hallenkran oder einem Hubstapler bewegt und versetzt werden. Dies ermöglicht es, etwa im Falle einer Kapazitätsänderung zusätzliche Beschichtungsvorrichtungen 20 zuzufügen oder abzuführen oder zu Reparatur- oder Wartungszwecken eine bestehende Beschichtungsvorrichtung 20 durch eine neue Beschichtungsvorrichtung 20 auszutauschen.

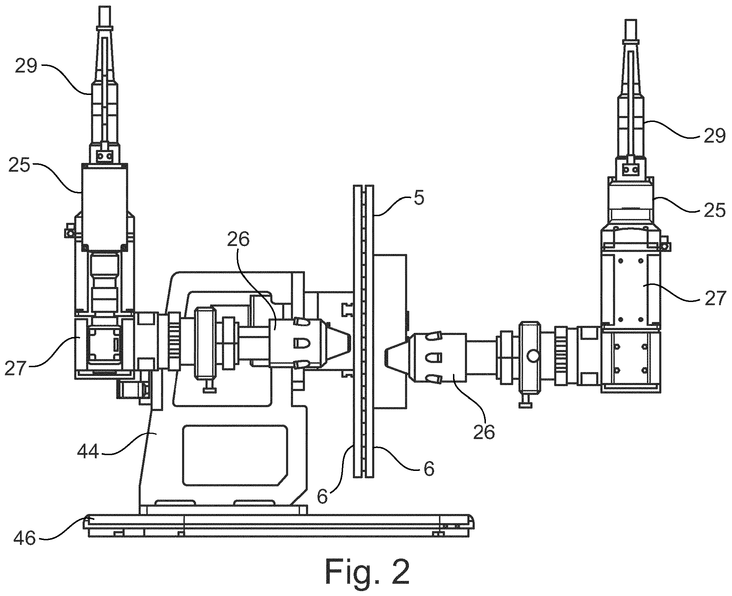

In der Beschichtungsvorrichtung 20 wird mindestens eine Fläche des Werkstücks 5 mit einer metallischen Beschichtung versehen, wie nachfolgend näher im Zusammenhang mit Fig. 2 erläutert werden wird. Nach der Beschichtung wird das Werkstück 5 durch die Eintrittsöffnung 24 zurück auf die Fördereinrichtung 36 geleitet. Dies kann ebenfalls mit der Zuführeinrichtung 38 erfolgen. Durch die Fördereinrichtung 36 wird das beschichtete Werkstück 5 zu einer gemeinsamen Ausgangsmessstation 50 transportiert, in welcher die beschichtete Oberfläche des Werkstücks 5 vermessen wird. Nach diesem abschließenden Vermessen in der Ausgangsmessstation 50 wird das Werkstück zurück auf die Hauptfördereinrichtung 60 gesetzt, mit welcher das Werkstück 5 zu einer weiteren Bearbeitung gefördert werden kann. Das Übertragen des Werkstücks 5 von der Fördereinrichtung 36 in die Ausgangsmessstation 50 und wieder auf die Hauptfördereinrichtung 60 kann ebenfalls über eine Handhabungseinrichtung 32 wie an der Eingangsmessstation 40 erfolgen, wobei diese in Fig. 1 nicht dargestellt ist.

Die in der Eingangsmessstation 40 ermittelten Messwerte zu einem bestimmten Werkstück 5 werden an eine zentrale Steuereinrichtung übermittelt. Durch die Steuereinrichtung wird auch die Fördereinrichtung 36 mit der jeweiligen Zuführeinrichtung 38 gesteuert, so dass das vermessene Werkstück 5 einer bestimmten Beschichtungsvorrichtung 20 der Modulgruppe 30 zugeleitet wird. Gleichzeitig werden der ausgewählten oder bestimmten Beschichtungsvorrichtung 20 von der Steuereinrichtung die Messwerte des bestimmten Werkstückes 5 zugeleitet, so dass eine Beschichtung des Werkstücks 5 abhängig von den Eingangsmesswerten erfolgen kann. Nach dem Beschichten wird das Werkstück in der kastenförmigen Ausgangsmessstation 50 vermessen, wobei die ermittelten Messwerte ebenfalls der zentralen Steuereinrichtung und dem Datensatz zu dem bestimmten Werkstück zugeleitet werden. In der Steuereinrichtung kann ein Vergleich der Eingangsmesswerte und der Ausgangsmesswerte sowie der Beschichtungsparameter durchgeführt werden, um festzustellen, ob eine korrekte Beschichtung erfolgt ist. Gegebenenfalls kann durch die Steuereinrichtung eine Nachstellung von Betriebsparametern einer Beschichtungsvorrichtung 20 beim Beschichten durchgeführt werden.

Gemäß Fig. 2 kann als zu beschichtendes Werkstück 5 ein scheibenförmiges Element vorgesehen sein, insbesondere eine Bremsscheibe mit einer oder zwei zu beschichtenden Werkstückflächen 6. Das Aufbringen der metallischen Beschichtung kann über eine Auftragsdüse 26 einer Auftragseinrichtung 25 mittels Laserauftragsschweißen durchgeführt werden. Die Auftragsdüse 26 ist an einem Träger 27 angeordnet. Beim Auftragsschweißen wird zunächst Beschichtungsmaterial, insbesondere ein Metallpulver, aufgebracht und dann mittels Laser lokal aufgeschmolzen. Dabei kann das Beschichten in mehreren Schritten und in mehreren Schichten erfolgen. Insbesondere können die Schichten auch mit unterschiedlichen Schichtdicken mit unterschiedlichen Materialien und unterschiedlichen Verfahren aufgebracht werden, um gewünschte Eigenschaften zu erreichen, insbesondere hinsichtlich Anhaftung, Abriebfestigkeit und/oder Korrosionsbeständigkeit. Der Laser der Auftragseinrichtung 25 kann im Bereich der Auftragsdüse 26 angeordnet sein.

Nach der Erfindung ist es möglich, die Beschichtung mit zwei oder mehreren Auftragseinrichtungen 25 vorzunehmen, wobei die Auftragsdüsen 26 jeweils mittels eines Trägers 27 entlang der zu beschichtenden Werkstückflächen 6 mittels einer Bewegungseinrichtung 29, etwa von Linearmotoren, verfahren wird. Beim Laserauftragsschweißen gemäß Fig. 2 sind zwei Beschichtungseinrichtungen 25 gegenüberliegend angeordnet, wobei gegenüberliegende Seiten eines vertikal angeordneten Werkstücks 5 gleichzeitig beschichtet werden. Das Werkstück 5 wird dabei drehbar an einer Halteeinrichtung 44 auf einer Transportpalette 46 gehalten.

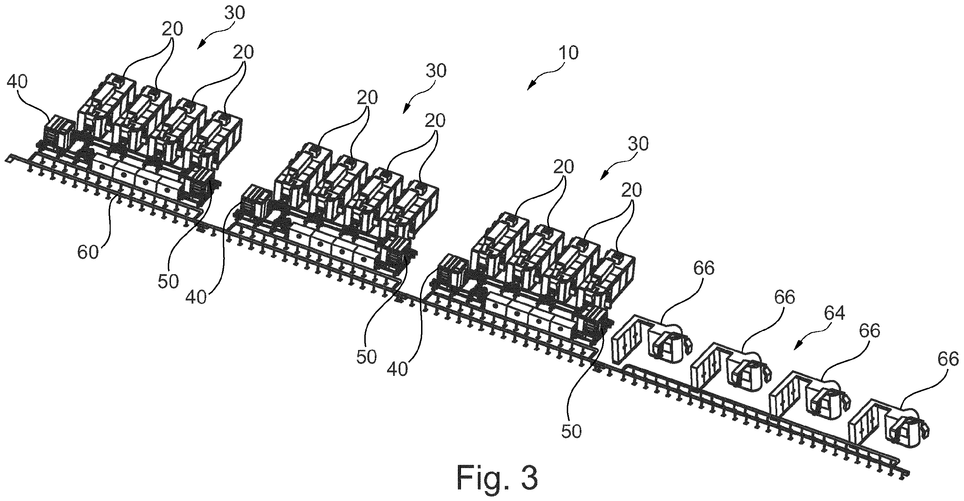

Eine Weiterbildung einer erfindungsgemäßen Anlage 10 mit insgesamt drei Modulgruppen 30 aus je vier Beschichtungsvorrichtungen 20 ist in Fig. 3 dargestellt. Die einzelnen Modulgruppen 30 sind dabei entsprechend dem Ausführungsbeispiel gemäß Fig. 1 ausgebildet, wobei in jeder Modulgruppe 30 eine Eingangsmessstation 40 und eine Ausgangsmessstation 50 zugeordnet sind.

Die insgesamt drei Modulgruppen 30 sind entlang einer linearen Hauptfördereinrichtung 60 angeordnet, so dass bei dieser Parallelanordnung eine parallele Bearbeitung von Werkstücken in den einzelnen Modulgruppen 30 und in den einzelnen Bearbeitungsvorrichtungen 20 erfolgen kann. Ein fertig beschichtetes Werkstück wird nach Durchgang durch die jeweilige Ausgangsmessstation 50 zurück auf die Hauptfördereinrichtung 60 geleitet, mit welcher das Werkstück einer Nachbearbeitungsstation 64 zugeleitet wird.

In dem dargestellten Ausführungsbeispiel gemäß Fig. 3 weist die Nachbearbeitungsstation 64 insgesamt vier parallel angeordnete Schleifvorrichtungen 66 auf. Mit den Schleifvorrichtungen 66 kann die mindestens eine beschichtete Fläche des Werkstücks abschließend bearbeitet und beschliffen werden. Um eine effiziente Nachbearbeitung sicherzustellen, können die erfassten Messwerte zu jedem Werkstück der bestimmten Schleifvorrichtung 66 in der Nachbearbeitungsstation 64 zugeleitet werden, welche zur Bearbeitung des Werkstücks von der Steuereinrichtung ausgewählt wurde. Abhängig beispielsweise von der erfassten Endhöhe der beschichteten Fläche des Werkstücks kann so eine effiziente Zustellung des Schleifwerkzeuges in der jeweiligen Schleifvorrichtung 66 an das Werkstück erfolgen.

Insbesondere aus dem Ausführungsbeispiel gemäß Fig. 3 ist zu ersehen, dass selbst bei größeren, eventuell notwendigen Kapazitätserweiterungen nicht nur einzelne Beschichtungsmodule 20 sondern ganze Modulgruppen 30 mit jeweils mehreren Beschichtungsmodulen 20 und zugehöriger Eingangsmessstation 40 und Ausgangsmessstation 50 einer Gesamtanlage ohne weiteres zugefügt werden können.

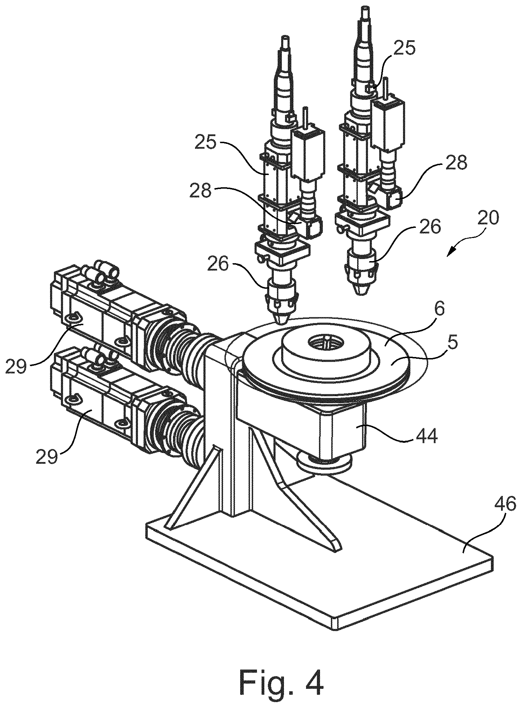

Eine weitere erfindungsgemäße Beschichtungsvorrichtung 20 ist in Fig. 4 dargestellt. Bei dieser Beschichtungsvorrichtung 20 ist das Werkstück 5 an einer Halteeinrichtung 44 auf einer Transportpalette 46 so drehbar angeordnet, dass die zu beschichtende ringförmige Werkstückfläche 6 horizontal gerichtet ist. Über eine Bewegungseinrichtung 29, welche insbesondere Dreh- und Linearmotoren aufweist, kann das Werkstück 5 an der Halteeinrichtung 44 in eine Drehbewegung und in eine radial gerichtete Linearbewegung versetzt werden. Oberhalb der zu beschichtenden Werkstückfläche 6 sind zwei Auftragseinrichtungen 25 mit jeweils einer Auftragsdüse 26 und einem Laser 28 angeordnete. Die Auftragseinrichtungen 25 können vertikal zum Werkstück 5 und soweit notwendig, auch in einer horizontalen Ebene verstellt werden. Bei dieser Beschichtungsvorrichtung 20 kann das Werkstück 5 gleichzeitig durch die zwei Auftragseinrichtungen 25 beschichtet werden.

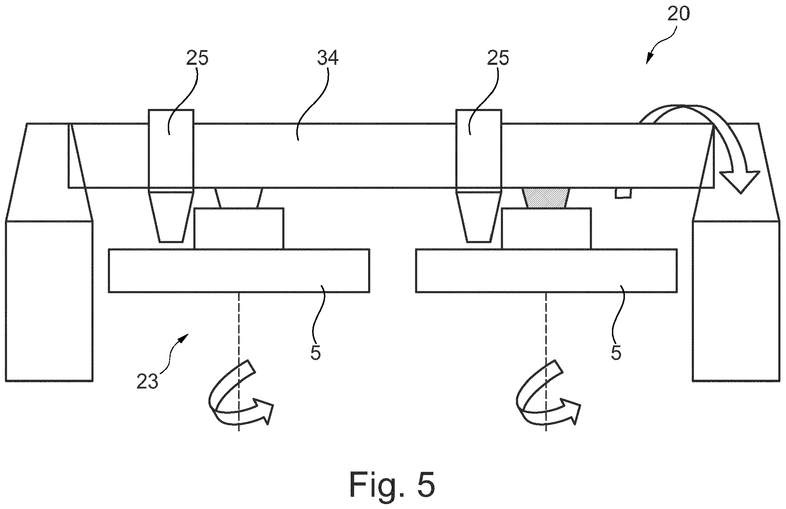

Gemäß Fig. 5 ist eine weitere Anordnungsvariante einer erfindungsgemäßen Beschichtungsvorrichtung 20 dargestellt. Bei dieser Beschichtungsvorrichtung 20 befinden sich gleichzeitig zwei Werkstücke 5 in einem Arbeitsraum 23. Die vorzugsweise rotationssymmetrischen Werkstücke 5 sind dabei drehbar um eine vertikale Drehachse angeordnet, wobei die Drehachsen jeweils parallel zueinander gerichtet sind. Die Werkstücke 5 werden dabei über jeweils eine Auftragseinrichtung 25 mit einer Beschichtung versehen. Die Auftragseinrichtungen 25 können an einem gemeinsamen Support 34 angeordnet sein, entlang welchem eine Linearbewegung der Auftragseinrichtungen 25 durchführbar ist. Der Support 34 kann auch zum gleichzeitigen Halten und Spannen der Werkstücke 6 in der Arbeitsposition vorgesehen sein, wobei der Support 34 selbst verstellbar, insbesondere verschwenkbar ist, wie durch einen Pfeil angedeutet wird.

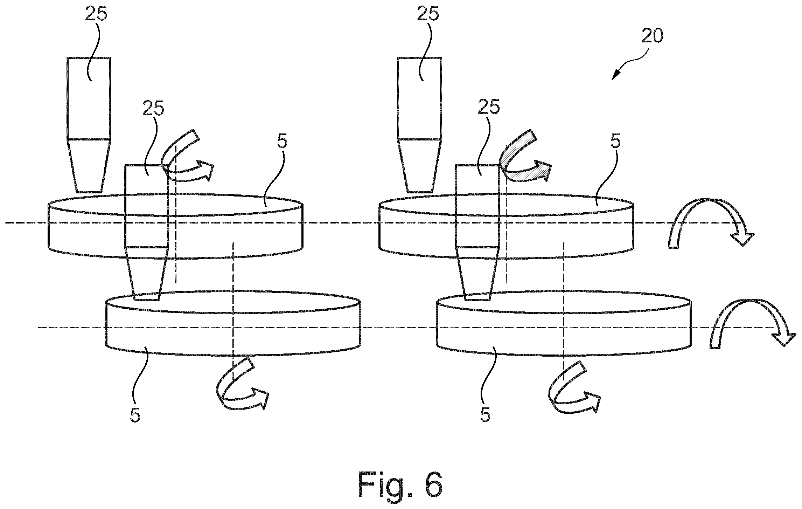

Gemäß Fig. 6 ist eine weitere erfindungsgemäße Beschichtungsvorrichtung 20 schematisch dargestellt, bei welcher vier Werkstücke gleichzeitig in einem Arbeitsraum der Beschichtungsvorrichtung 20 angeordnet sind. Die Werkstücke 5 sind dabei in einer horizontalen Anordnung parallel gerichtet zueinander jeweils um eine vertikale Drehachse drehbar gelagert. Jedes Werkstück 5 kann mit einer eigenen Beschichtungsvorrichtung 25 beschichtet werden.

Zum Durchführen einer Beschichtung auf beiden Seiten können die Werkstücke 5 jeweils in einer gemeinsamen oder einer separaten Bewegung um eine horizontale Schwenkachse verschwenkt werden, so dass auch eine gegenüberliegende horizontale Fläche des Werkstücks 5 beschichtet werden kann.

## Patentansprüche

1. Beschichtungsvorrichtung zum metallischen Beschichten von Werkstücken (5), mit
- einem Gehäuse (21), welches einen Arbeitsraum (23) umschließt,
- einer Halteeinrichtung (44) zum Halten mindestens eines Werkstückes (5) in dem Arbeitsraum (23),
- mindestens einer Auftragseinrichtung (25) mit einer Auftragsdüse (26) zum Aufbringen eines Metallpulvers auf eine zu beschichtende Werkstückfläche (6) und einem Laser zum lokalen Aufschmelzen des Metallpulvers auf der Werkstückfläche (6) zum Bilden einer Beschichtung, und
- mindestens einer Bewegungseinrichtung (29), mit welcher die mindestens eine Auftragseinrichtung (25) beim Beschichten relativ zur Werkstückfläche (6) bewegbar ist,
- wobei in dem Arbeitsraum (23) des Gehäuses (21) mindestens zwei Auftragseinrichtungen (25) angeordnet sind, welche zum gleichzeitigen Aufbringen und Aufschmelzen von Metallpulver ausgebildet sind.
**dadurch gekennzeichnet,**
- **dass** das Werkstück (5) drehbar an der Halteeinrichtung (44) gelagert ist,
- **dass** jede Auftragseinrichtung (25) jeweils durch zumindest eine Bewegungseinrichtung (29) beim Beschichten relativ zur Werkstückfläche (6) bewegbar ist,
- **dass** mindestens eine Bewegungseinrichtung (29), die zum Teil an der Halteeinrichtung (44) für das Werkstück angeordnet ist, einen Motor aufweist, durch welchen das Werkstück (5) in eine Drehbewegung versetzbar ist und
- **dass** eine Steuereinrichtung für die Bewegungseinrichtung (29) vorgesehen ist, mit welcher die Drehbewegung des Werkstücks (5) an der Halteeinrichtung (44) und die Bewegung der Auftragseinrichtung (25) relativ zum Werkstück (5) steuerbar sind.

2. Beschichtungsvorrichtung nach Anspruch 1,
**dadurch gekennzeichnet,**
**dass** die zu beschichtende Werkstückfläche (6) horizontal angeordnet ist.

3. Beschichtungsvorrichtung nach Anspruch 1,
**dadurch gekennzeichnet,**
**dass** die zu beschichtende Werkstückfläche (6) vertikal angeordnet ist.

4. Beschichtungsvorrichtung nach Anspruch 2,
**dadurch gekennzeichnet,**
**dass** zwei Auftragseinrichtungen (25) vorgesehen sind, welche sich um 180° versetzt um eine Mittenachse des Werkstücks (5) gegenüberliegen.

5. Beschichtungsvorrichtung nach Anspruch 3,
**dadurch gekennzeichnet,**
**dass** die Auftragseinrichtungen (25) zum Beschichten eines Werkstücks (5) an zwei scheiben- oder plattenförmigen gegenüberliegenden Werkstückflächen (6) ausgebildet sind.

6. Beschichtungsvorrichtung nach Anspruch 5,
**dadurch gekennzeichnet,**
**dass** die Auftragseinrichtungen (25) unmittelbar gegenüberliegen und das Beschichten auf beiden Seiten gleichzeitig durchführbar ist.

7. Beschichtungsvorrichtung nach einem der Ansprüche 1 bis 6,
**dadurch gekennzeichnet,**
**dass** mindestens zwei Werkstücke (5) in dem Arbeitsraum (23) anordenbar sind und gleichzeitig von Auftragseinrichtungen (25) beschichtbar sind.

8. Verfahren zum metallischen Beschichten von Werkstücken (5), mit einer Beschichtungsvorrichtung (20) nach einem der Ansprüche 1 bis 7, bei dem
- mindestens ein Werkstück (5) mit einer Halteeinrichtung (44) in einem Gehäuse (21) in einem Arbeitsraum (23) gehalten wird,
- eine Werkstückfläche (6) mit mindestens einer Auftragseinrichtung (25) beschichtet wird, wobei mit einer Auftragsdüse (26) der mindestens einen Auftragseinrichtung (25) ein Metallpulver auf eine zu beschichtende Werkstückfläche (6) aufgebracht und mittels eines Lasers der mindestens einen Auftragseinrichtung (25) das aufgebrachte Metallpulver lokal auf der Werkstückfläche (6) aufgeschmolzen wird, wobei sich eine metallische Beschichtung bildet, und
- die mindestens eine Auftragseinrichtung (25) beim Beschichten mittels mindestens einer Bewegungseinrichtung (29) relativ zur Werkstückfläche (6) bewegt wird,
- wobei in dem Gehäuse (21) in dem Arbeitsraum (23) mindestens zwei Auftragseinrichtungen (25) angeordnet werden, welche gleichzeitig Metallpulver auftragen und aufschmelzen,
**dadurch gekennzeichnet,**
- **dass** das Werkstück (5) drehbar an der Halteeinrichtung (44) gelagert ist,
- **dass** jede Auftragseinrichtung (25) jeweils durch zumindest eine Bewegungseinrichtung (29) beim Beschichten relativ zur Werkstückfläche (6) bewegbar ist,
- **dass** die mindestens eine Bewegungseinrichtung (29), die zum Teil an der Halteeinrichtung (44) für das Werkstück angeordnet ist, einen Motor aufweist, durch welchen das Werkstück (5) in eine Drehbewegung versetzt wird, und
- **dass** für die mindestens eine Bewegungseinrichtung (29) eine Steuereinrichtung vorgesehen ist, mit welcher die Drehbewegung des Werkstücks (5) an der Halteeinrichtung (44) und die Bewegung der Auftragseinrichtung (25) relativ zum Werkstück (5) gesteuert werden.

9. Verfahren nach Anspruch 8,
**dadurch gekennzeichnet,**
**dass** die zu beschichtende Werkstückfläche (6) beim Beschichten horizontal oder vertikal angeordnet wird.

10. Verfahren nach Anspruch 8 oder 9,
**dadurch gekennzeichnet,**
**dass** zumindest zwei Auftragseinrichtungen (25) gleichzeitig an dem Werkstück (5) eine Beschichtung auftragen.

11. Verfahren nach einem der Ansprüche 8 bis 10,
**dadurch gekennzeichnet,**
**dass** sich die Auftragseinrichtungen (25) unmittelbar gegenüberliegen und ein Beschichten auf einer oder an zwei gegenüberliegenden Seiten des Werkstücks (5) gleichzeitig durchgeführt wird.

12. Verfahren nach einem der Ansprüche 8 bis 11,
**dadurch gekennzeichnet,**
**dass** mindestens zwei Werkstücke (5) in dem Arbeitsraum (23) angeordnet und gleichzeitig mit Auftragseinrichtungen (25) beschichtet werden.

## Claims

1. Coating device for metal-coating of workpieces (5), comprising
- a housing (21), which surrounds a working space (23),
- a retaining apparatus (44) for retaining at least one workpiece (5) in the working space (23),
- at least one deposition apparatus (25) comprising a deposition nozzle (26) for applying a metal powder to a workpiece surface (6) to be coated, and a laser for locally melting the metal powder on the workpiece surface (6) to form a coating, and
- at least one movement apparatus (29), by means of which the at least one deposition apparatus (25) can be moved relative to the workpiece surface (6) during the coating,
- wherein at least two deposition apparatuses (25) are arranged in the working space (23) of the housing (21), which apparatuses are designed to simultaneously apply and melt metal powder,
**characterised**
- **in that** the workpiece (5) is rotatably mounted on the holding device (44),
- **in that** each deposition apparatus (25) can be moved relative to the workpiece surface (6) by at least one movement device (29) during coating,
- **in that** at least one movement apparatus (29), which is arranged in part on the holding device (44) for the workpiece, has a motor by means of which the workpiece (5) can be set in a rotational movement, and
- **in that** a control device is provided for the movement apparatus (29), with which the rotary movement of the workpiece (5) on the holding device (44) and the movement of the deposition apparatus (25) relative to the workpiece (5) can be controlled.

2. Coating device according to claim 1,
**characterised in that**
the workpiece surface (6) to be coated is arranged horizontally.

3. Coating device according to claim 1,
**characterised in that**
the workpiece surface (6) to be coated is arranged vertically.

4. Coating device according to claim 2,
**characterised in that**
two deposition apparatuses (25) are provided, which are opposite to each other offset by 180° about a center axis of the workpiece (5).

5. Coating device according to claim 3,
**characterised in that**
the deposition apparatuses (25) are designed for coating a workpiece (5) on two disc-shaped or planar opposite workpiece surfaces (6).

6. Coating device according to claim 5,
**characterised in that**
the deposition apparatuses (25) are directly opposite one another and the coating can be carried out on both sides simultaneously.

7. Coating device according to any of claims 1 to 6,
**characterised in that**
at least two workpieces (5) can be arranged in the working space (23) and can be coated simultaneously by deposition apparatuses (25).

8. Method for metal-coating of workpieces (5), using a coating device (20) according to any of claims 1 to 7, in which
- at least one workpiece (5) is retained in a housing (21) in a working space (23) by means of a retaining apparatus (44),
- a workpiece surface (6) is coated by means of at least one deposition apparatus (25), wherein a metal powder is applied to a workpiece surface (6) to be coated by means of a deposition nozzle (26) of the at least one deposition apparatus (25) and the applied metal powder is locally melted on the workpiece surface (6) by means of a laser of the at least one deposition apparatus (25), with a metal coating being formed, and
- the at least one deposition apparatus (25) is moved relative to the workpiece surface (6) during the coating by means of at least one movement apparatus (29),
- wherein at least two deposition apparatuses (25) are arranged in the working space (23) in the housing (21), which apparatuses simultaneously apply and melt metal powder
**characterised**
- **in that** the workpiece (5) is rotatably mounted on the holding device (44),
- **in that** each deposition apparatus (25) can be moved relative to the workpiece surface (6) by at least one movement apparatus (29) during coating,
- **in that** the at least one movement device (29), which is arranged in part on the holding device (44) for the workpiece, has a motor by means of which the workpiece (5) is set in a rotational movement, and
- **in that** a control device is provided for the at least one movement apparatus (29), with which the rotary movement of the workpiece (5) on the holding device (44) and the movement of the deposition apparatus (25) relative to the workpiece (5) are controlled.

9. Method according to claim 8,
**characterised in that**
the workpiece surface (6) to be coated is arranged horizontally or vertically during the coating.

10. Method according to claim 8 or 9,
**characterised in that**
at least two deposition apparatuses (25) simultaneously deposit a coating on the workpiece (5).

11. Method according to any of claims 8 to 10,
**characterised in that**
that deposition apparatuses (25) are directly opposite one another and coating is carried out on one side or on two opposite sides of the workpiece (5) simultaneously.

12. Method according to any of claims 8 to 11,
**characterised in that**
at least two workpieces (5) are arranged in the working space (23) and are coated simultaneously using deposition apparatuses (25).

## Revendications

1. Dispositif de revêtement pour le revêtement métallique de pièces (5), comprenant :
- un boîtier (21) qui délimite un espace de travail (23),
- un dispositif de support (44) pour maintenir au moins une pièce (5) dans l'espace de travail (23),
- au moins un dispositif d'application (25) présentant une buse d'application (26) pour appliquer une poudre métallique sur une surface de pièce à revêtir (6) et un laser pour faire fondre localement la poudre métallique sur la surface de pièce (6) de manière à former un revêtement, et
- au moins un dispositif de déplacement (29) à l'aide duquel ledit au moins un dispositif d'application (25) peut être déplacé par rapport à la surface de pièce (6) pendant l'opération de revêtement,
- dans lequel au moins deux dispositifs d'application (25) sont disposés dans l'espace de travail (23) du boîtier (21) et sont conçus de manière à appliquer la poudre métallique et à faire fondre celle-ci simultanément,
**caractérisé en ce que** :
- la pièce (5) est montée de façon rotative sur le dispositif de support (44),
- chaque dispositif d'application (25) peut être déplacé à l'aide d'au moins un dispositif de déplacement (29) pendant l'opération de revêtement par rapport à la surface de pièce (6), et
- au moins un dispositif de déplacement (29), qui est disposé en partie sur le dispositif de support (44) de la pièce, est équipé d'un moteur par l'intermédiaire duquel la pièce (5) peut être mise en rotation, et
- un dispositif de commande est prévu pour le dispositif de déplacement (29), par l'intermédiaire duquel le mouvement de rotation de la pièce (5) sur le dispositif de support (44) et le déplacement du dispositif d'application (25) par rapport à la pièce (5) peuvent être commandés.

2. Dispositif de revêtement selon la revendication 1, **caractérisé en ce que** la surface de pièce à revêtir (6) est disposée horizontalement.

3. Dispositif de revêtement selon la revendication 1, **caractérisé en ce que** la surface de pièce à revêtir (6) est disposée verticalement.

4. Dispositif de revêtement selon la revendication 2, **caractérisé en ce que** deux dispositifs d'application (25) sont prévus et se font face avec un décalage de 180° autour d'un axe médian de la pièce (5).

5. Dispositif de revêtement selon la revendication 3, **caractérisé en ce que** les dispositifs d'application (25) sont conçus de manière à revêtir une pièce (5) sur deux surfaces de pièce opposées (6) en forme de disque ou de plaque.

6. Dispositif de revêtement selon la revendication 5, **caractérisé en ce que** les dispositifs d'application (25) sont opposés directement, et **en ce que** l'opération de revêtement peut être réalisée simultanément sur les deux côtés.

7. Dispositif de revêtement selon l'une quelconque des revendications 1 à 6, **caractérisé en ce qu'**au moins deux pièces (5) peuvent être disposées dans l'espace de travail (23) et peuvent être revêtues simultanément à l'aide des dispositifs d'application (25).

8. Procédé de revêtement métallique de pièces (5), comprenant un dispositif de revêtement (20) selon l'une quelconque des revendications 1 à 7, dans lequel :
- au moins une pièce (5) est maintenue par un dispositif de support (44) à l'intérieur d'un boîtier (21) dans un espace de travail (23),
- une surface de pièce (6) est revêtue à l'aide d'au moins un dispositif d'application (25), une poudre métallique étant appliquée par l'intermédiaire d'une buse d'application (26) dudit au moins un dispositif d'application (25) sur une surface de pièce à revêtir (6), la poudre métallique appliquée étant fondue localement sur la surface de pièce (6) au moyen d'un laser dudit au moins un dispositif d'application (25), un revêtement métallique étant alors formé, et
- ledit au moins un dispositif d'application (25) est déplacé par rapport à la surface de pièce (6) pendant l'opération de revêtement à l'aide d'au moins un dispositif de déplacement (29),
- dans lequel au moins deux dispositifs d'application (25) sont disposés à l'intérieur du boîtier (21) dans l'espace de travail (23) pour appliquer la poudre métallique et faire fondre celle-ci simultanément,
**caractérisé en ce que** :
- la pièce (5) est montée de façon rotative sur le dispositif de support (44),
- chaque dispositif d'application (25) peut être déplacé par rapport à la surface de pièce (6) à l'aide d'au moins un dispositif de déplacement (29) pendant l'opération de revêtement,
- ledit au moins un dispositif de déplacement (29), qui est disposé en partie sur le dispositif de support (44) de la pièce, est équipé d'un moteur par l'intermédiaire duquel la pièce (5) est mise en rotation, et
- un dispositif de commande est prévu pour ledit au moins un dispositif de déplacement (29), par l'intermédiaire duquel le mouvement de rotation de la pièce (5) sur le dispositif de support (44) et le déplacement du dispositif d'application (25) par rapport à la pièce (5) sont commandés.

9. Procédé selon la revendication 8, **caractérisé en ce que** la surface de pièce à revêtir (6) est disposée horizontalement ou verticalement pendant l'opération de revêtement.

10. Procédé selon la revendication 8 ou 9, **caractérisé en ce qu'**au moins deux dispositifs d'application (25) appliquent simultanément un revêtement sur la pièce (5).

11. Procédé selon l'une quelconque des revendications 8 à 10, **caractérisé en ce que** les dispositifs d'application (25) sont opposés directement, et **en ce qu'**une opération de revêtement est réalisée simultanément sur un ou chacun des deux côtés opposés de la pièce (5).

12. Procédé selon l'une quelconque des revendications 8 à 11, **caractérisé en ce qu'**au moins deux pièces (5) sont disposées dans l'espace de travail (23) et sont revêtues simultanément à l'aide des dispositifs d'application (25).
